# NEW EUROPEAN PATENT SPECIFICATION

(11) **EP 0 148 394 B2**
(45) Date of publication and mention of the opposition decision: **03.08.1994**
(45) Mention of the grant of the patent: 04.04.1990
(21) Application number: 84114421.5
(22) Date of filing: 28.11.1984
(51) Int. Cl.: H02B 13/035

(54) **Enclosed switchgears**
Gekapselte Schaltanlagen
Installations de commutation blindées

(30) Priority: 30.11.1983 JP 226504/83; 31.01.1984 JP 15718/84
(43) Date of publication of application: 17.07.1985
(73) Proprietor: KABUSHIKI KAISHA TOSHIBA, Kawasaki-shi, Kanagawa-ken 210 (JP); SHOWA ELECTRIC WIRE & CABLE CO.,LTD., Kawasaki-shi, Kanagawa-ken (JP)
(72) Inventor: Matsuzawa, Kikuo, Kunitachi-Shi Tokyo-To (JP); Sekiguchi, Nobuo, Tokorozawa-Shi Saitama-Ken (JP); Masaki, Nobuo, Fuchu-Shi Tokyo-To (JP); Sugimoto, Masayoshi, Tama-Shi Tokyo-To (JP); Kojima, Ryoichi, Hiratsuka-Shi Kanagawa-Ken (JP); Kimura, Ichiro, Yokohama-Shi Kanagawa-Ken (JP)
(74) Representative: Patentanwälte

(56) References cited:
- FR-A- 2 423 897
- US-A- 3 509 518
- US-A- 3 517 113
- US-A- 3 845 458
- Firmenprospekt "Die Steckbaren von Pfisterer"
- Veröffentlichung "400 TB-122" von Elastimold

## Description

### Background of the invention

This invention relates to an enclosed type switchgear array comprising a plurality of gas-filled switch- gears or cubicles.

Recently sulfur hexafluoride (SF₆) gas of a pressure approximately equal to 0.5 kg/cm² is filled in the cubicles for reducing the distance between conductors or buses, and hence reducing the sizes of the cubicles.

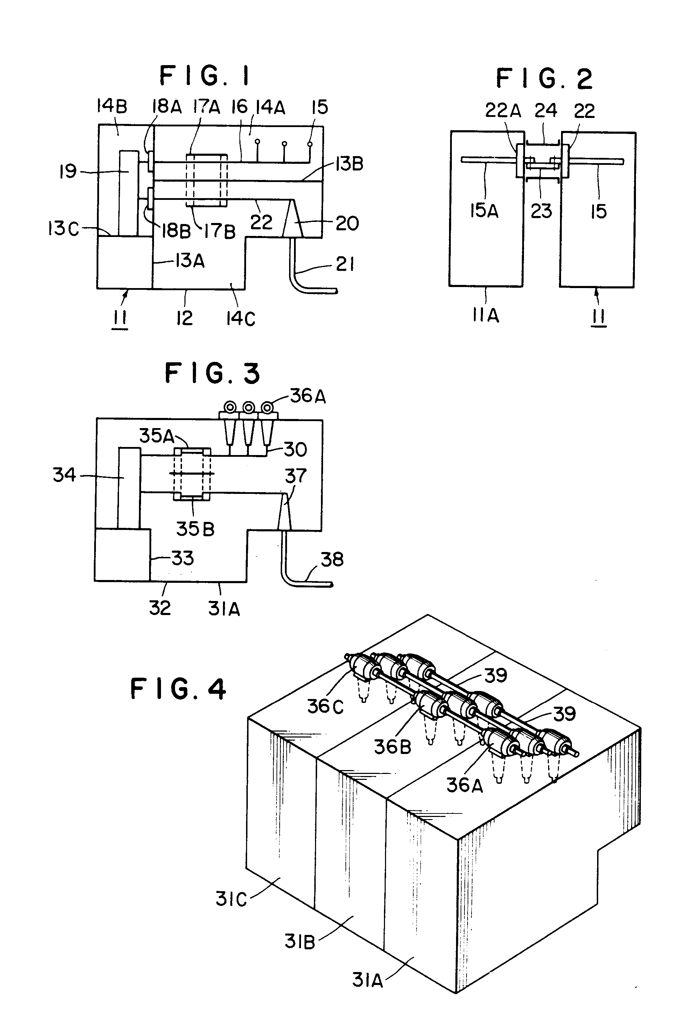

Fig. 1 illustrates an example of such a cubicle generally designated by 11. The cubicle 11 comprises a box-shaped housing 12, the internal space thereof being separated by a vertical wall 13A and two horizontal walls 13B and 13C into three separate chambers 14A, 14B and 14C, all of which are filled with the sulfur hexafluoride (SF₆) gas.

Power source side buses 15 are provided to extend horizontally through an upper portion in the chamber 14A. Conductors 16 are provided to connect the buses 15 to a disconnect switch 17A provided in the chamber 14A, and then through an insulating plate 18A fitted in the separating wait 13Ato a circuit breaker 19 encased in the chamber 14B. In the lower chamber 14C, there is provided a cable head 20 used for an out-going cable 21. Conductors 22 connect the terminals of the head conductors to another disconnect switch 17B, and then via an insulating plate 18B to lower poles (not shown) of the circuit breaker 19.

When the enclosed switchgear array has been assembled in a factory, sulfur hexafluoride (SF₆) gas is filled in the component cubicles, with the density, pressure and the water content of the gas being controlled to their standard ranges.

The switchgear array thus assembled and filled with the insulating gas SF₆ is then disassembled into individual cubicles for the purpose of transportation. In this case, the buses 15 in the cubicles which are temporarily connected together are disconnected from each other, and reconnected in the site where the switchgear array is assembled together.

For allowing the disconnection and reconnection of the buses 15 without opening the cubicles 11, for instance two cubicles 11 and 11A which include buses 15 and 15A, are arranged in a spaced apart relation as shown in Fig. 2, with the ends of the buses 15 and 15A projecting outwardly from insulating plates 22 and 22A provided in the side walls of the cubicles 11 and 15, respectively. The outer ends of the buses 15 and 15A opposing each other are then connected together through conductors 23. A cylindrical cover 24 is secured, at both ends thereof, to the side walls of the cubicles 11 and 11A for encasing the connected portion of the buses 15 and 15A in a gas-tight manner, and sulfur hexafluoride gas (SF₆) is filled in the cylindrical cover 24.

With the above described construction, the enclosed type switchgear array can be separated into the individual cubicles without opening any of the gas filled chambers 14A, 14B and 14C. However, since the gas-filled cylindrical cover 24 must be opened each time when the buses 15 and 15A of the two adjacent cubicles 11 and 11 A are separated from each other, the SF₆ gas must be refilled inside of the cylindrical cover 24 after assembling the switchgear array in the installation site.

FR-A-2 423 897 discloses an enclosed type switch gear array composed of a plurality of cubicles filled with sulfur hexafluoride (SFₛ), each cubicle including electric apparatus and power source buses, the buses of adjoining cubicles being connected together through connectors provided outside of the cubicles and an insulated conductor cable extending between adjoining connectors. With this array it is not possible to connect or disconnect the buses included in the component cubicles without opening and closing any of the gas-filled chambers.

US-A-3 509 518 discloses a T-shaped cable connector for connecting two long cables end-to-end within a lateral tube of the connector and for connecting the long cables to a branch cable. This connector comprises a bushing, a conductor, a shielding element, an electrically conductive plug member, a resilient contacting piece, a stress cone and forcing means. But this cable connector is not usable for the purpose of electrical connection of cubicles according to the present invention.

### Summary of the invention

An object of this invention is to provide an enclosed type switchgear array wherein buses included in the component cubicles can be connected or disconnected without opening and closing any of the gas-filled chambers.

Another object of this invention is to provide an enclosed type switchgear array wherein the connection of buses included in two adjacent cubicles can be realized by connectors provided outside of the cubicles and short straight cables extending between the connectors.

These and other objects of the invention can be achieved by an enclosed type switchgear array composed of a plurality of cubicles of a gas-filled type, each cubicle including electric apparatus and power source buses, the buses of adjoining cubicles being connected together through connectors fixedly mounted on the outside of the cubicles at a predetermined distance from each other and an inflexible insulated conductor cable extending between adjoining connectors, and the switchgear array is characterized in that each of said connectors comprises a T-shaped insulating bushing having a central leg portion inserted through and secured to an outside wall of one of the cubicles, a pair of lateral arm portions integrally extending from said leg portion at a position outside of said one cubicle, said arm portions having a laterally extending through passage, an electrically conductive shielding member in the form of a sleeve fixedly secured in said through passage and having a cylindrical through hole coaxial with the through passage, said through passage and the through hole of the shielding member having a diameter larger than the outer diameter of said conductor cable, and a conductor passed through the leg portion of the insulating bushing and electrically connected at one end thereof to the associated bus and at the other end thereof to said shielding member, that said conductor cable is of a length corresponding substantially to the distance between the adjoining connectors, and an exposed conductor portion at each end of the insulated cable has fixedly fitted thereon an electrically conductive, cylindrical plug member having an outer diameter substantially equal to the diameter of said through hole of the shielding member, said plug member being in slidable surface-to-surface contact with the internal surface of said through hole with a resilient contacting piece interposed therebetween, and that a stress cone is inserted between the outer surface of the insulated cable and a conical recess formed coaxially with, and in the end portion of, the through passage of the bushing, and means are secured to the end portion of bushing for forcing said stress cone toward a gap formed between the cable and the bushing.

### Brief description of the drawings

In the accompanying drawings:
Fig. 1 is a diagram showing a conventional cubicle;
Fig. 2 is a diagram showing two adjacent cubicles shown in Fig. 1, with buses provided therein being connected together;
Fig. 3 is a diagram showing a cubicle, a plurality of which are connected together according to this invention;
Fig. 4 is a perspective view-showing an enclosed switchgear array according to this invention;
Fig. 5 is an elevational sectional view showing a connecting device constituting an important part of this invention;
Fig. 6 is an elevational view partly in section adapted to explain a way of connection utilizing the connecting device shown in Fig. 5; and
Figs. 7 and 8 are diagrams showing further embodiments of this invention.

### Description of the preferred embodiments

This invention will now be described in detail hereunder with reference to the preferred embodiments illustrated in Figs. 3 through 8.

In an embodiment shown in Fig. 3, the interior of a casing 32 of a gas-tight cubicle 31A is separated by a separating wall 33 into two chambers which are filled with the insulating gas SFₛ. On the upper side of the separating wall 33 is provided a circuit breaker 34, the power source side terminals of which are connected through a disconnect switch 35A to power source side buses 30 which are in turn connected to the lower terminals of T-shaped connectors 36A projecting downwardly through the top wall of the cubicle 31A. On the other hand, the load side terminals of the circuit breaker 34 are connected through another disconnect switch 35B to a cable head 37 of an out-going cable 38.

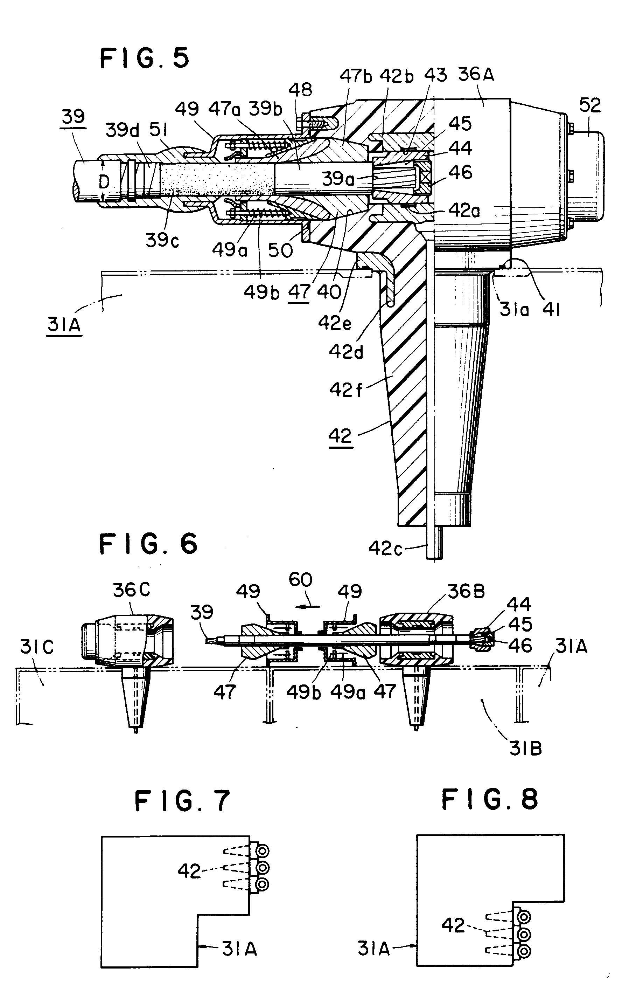

In case where a number of the above described cubicles 31A are arranged to provide an enclosed type switchgear array, the power source side buses in the cubicles are connected together as shown in Figs. 4 and 5. That is, the T-shaped connectors 36A, 36B and 36C provided on the upper side of the cubicles 31A, 31 B and 31 C, respectively, in a staggered manner as shown in Fig. 4 are connected together by single conductor high voltage polyethylene insulated aerial cables (hereinafter simply termed cables) 39. Fig. 5 illustrates one of the T-shaped connectors 36A provided on the upper side of the rightmost cubicle 31A.

As shown in Fig. 5, a circular hole 31 a is provided through the top wall of the cubicle 31A. The downwardly extending portion of the T-shaped connector 36A is inserted through the hole 31a with an O-ring 41 interposed between the connector 36Aand the upper surface of the cubicle 31A. The T-shaped connector 36A is then secured to the top wall of the cubicle 31A by means of bolts and nuts (not shown).

The T-shaped connector 36 comprises a T-shaped bushing 42 made of, for instance, epoxy resin 42f. An electrically conductive shielding member 42b and a bar-shaped vertically extending conductor 42c, whose upper end is driven into the shielding member 42b in thread engagement and whose lower end extends in excess of the bushing 42, are integrally formed with the bushing 42. A mounting base 42e having a shielding portion 42d is also formed integrally with the bushing 42 so that it is secured to the top wall of the cubicle 31Aas described above. The electrically conductive shielding member 42b has an axially extending through hole of a diameter larger than the outside diameter of a single conductor insulated cable 39. A pair of annular grooves 42a are formed around the internal surface of the through hole. Acon- tactor 43 made of an electrically conductive resilient material (such as beryllium copper) formed into a louver-like configuration is inserted in each of the annular grooves 42a.

The cable 39 is stripped such that a conductor 39a, insulating layer 39b, semi-conductive layer 39c and a shielding layer 39d are exposed in this order in a stepwise manner. A plug 44 made of an electrically conductive material and generally formed into a frus- toconical configuration formed with an axially extending hole therein is slipped over an end of the conductor 39a. A plurality of wedge members 45 made of an electrically conductive material are inserted between the circumference of the conductor 39a and the internal surface of the axial hole of the plug 44. Aciamping member 46 thread-engaging with a part of the axial hole of the plug 44 is driven into the plug hole so that the clamping member 46 forces the wedge members 45 leftwardly as viewed in Fig. 5, so that the plug 44 is firmly secured around the distal end of the conductor 39a. In this manner, a good electrical conductance is assured between the conductor 39a of the cable 39 and the bar-shaped vertical conductor 42c of the T-shaped connector 36 through the wedge members 45, plug 44, contactor 43 and the shielding member 42b.

Between a portion of the cable 39 inclusive of the semi-conductive layer 39c and the insulating layer 39b and the insulating bushing 42, there is provided a stress cone 47 comprising a semi-conductive member 47a and an insulating member 47b, both formed in an integral manner. An insulating grease is beforehand applied to a part of the stress cone 47 to be inserted into the bushing 42. The insulating grease improves the dielectric strength along the surface of the stress cone 47. Outwardly of the stress cone 47, there is provided a protective sheath 49 secured by means of bolts 48 to a leftward end of the bushing 42, with an O-ring 50 interposed between the sheath 49 and the bushing 42. Internally of the protective sheath 49, there are provided a plurality of screw-threaded rods 49b and coil springs 49a provided around the screw-threaded rods 49b, respectively. Under the spring forces of the coil springs 49a, the screw-threaded rods 49b urge the stress cone 47 toward the bushing 42. The protective sheath 49, coil springs 49a and the screw-threaded rods 49b as well as other members (not numbered) mating therewith constitute a stress cone pressing device. Asealing tape 51 seals an end of the protective sheath 49 surrounding the semiconductive layer 39c of the cable 39. A blind cover 52 secured to the other end of the insulating bushing 42 is removed in the case of the connectors 36B provided on the cubicle 31 B shown in Fig. 4, and an end of a cable similar to the cable 39 is inserted through the end of the insulating bushing 42 into the corresponding end of the shielding member 42b so that the cable is connected to the shielding member 42b in the same manner as shown in the leftward half part of Fig. 5.

A procedure for interconnecting buses in the cubicles by use of the above described connector will now be described in detail with reference to Fig. 6 which illustrates a case where the buses in the cubi- des 31 B and 31 C in Fig. 4 are connected together.

Firstly a cable 39 of the above described construction is cut into a predetermined length, and both ends of the resultant cable section are stripped stepwisely as shown in Fig. 5. A plug 44 is secured to an end of the exposed conductor 39a of the cable section by use of the wedge members 45 and the clamping member46 as described hereinbefore. The other end of the cable section is inserted through the shielding member 42b of the connector 36B provided on the cubicle 31 B in a direction indicated by an arrow 60, and two sets to be used with the connectors 36B and 36C, and each comprising a stress cone 47 and a protective sheath 49 and else constituting the stress cone pressing device, are slipped over a part of the cable section passed in excess of the connector 36B, so that the two sets are disposed oppositely to each other. Then another plug 44 is secured to an end of the conductor 39a exposed on the left side of the cable section by use of the wedge members 45 and the clamping member46. The cable section is further shifted in the arrowed direction 60, so that both ends of the cable section are inserted into the shielding members 42b in the connectors 36B and 36C, respectively. The stress cones 47 are then shifted toward the connectors 36B and 36C and the protective sheaths 49b are secured to the insulating bushings 42 of the connectors 36B and 36C, while the stress cones 47 are pressed by the screw-threaded rods 49b toward the bushings 42 of the connectors 36B and 36C, respectively.

Although in the above description, the T-shaped connectors are provided through the top wall of the enclosed type cubicles, it is apparent that the connectors may otherwise be provided through a rear wall in an upper part as shown in Fig. 7 orthrough a rearwall in a lower part as shown in Fig. 8. Furthermore, when one or more of the cubicles are desired to be added to an enclosed type switchgear array as described hereinbefore, the blind covers 52 are removed out of the connectors provided on an end cubicle of the switchgear array, and the insulated cables are connected as described above to the shielding members of the connectors without discharging the insulation gas SF₆ filling the interior of the cubicles.

Since the cubicles constituting a switchgear array according to this invention are connected together as described above, there is no necessity of discharging and charging again the insulating gas even in a case where the switchgear array is once disassembled for transportation and the like and assembled again in the installation site. Furthermore, because no bending of the cables is required for the interconnection of the cubicles, the length of the cables can be reduced as desired, and the minimization of the cubicles can be thereby achieved.

## Claims

1. An enclosed type switchgear array composed of a plurality cubicles (31A,31 B,31 C) of a gas-filled type, each cubicle including electric apparatus (34,35A,35B) and power source buses (30), the buses of adjoining cubicles being connected together through connectors (36A,36B,36C) fixedly mounted on the outside of the cubicles at a predetermined distance from each other and an inflexible insulated conductor cable (39) extending between adjoining connectors, characterized in that
each of said connectors (36A,36B,36C) comprises a T-shaped insulating bushing (42) having a central leg portion inserted through and secured to an outside wall of one of the cubicles (31A,31 B,31 C), a pair of lateral arm portions integrally extending from said leg portion at a position outside of said one cubicle, said arm portions having a laterally extending through passage an electrically conductive shielding member (42b) in the form of a sleeve fixedly secured in said through passage and having a cylindrical through hole coaxial with the through passage, said through passage and the through hole of the shielding member (42b) having a diameter larger than the outer diameter of said conductor cable (39), and a conductor (42c) passed through the leg portion of the insulating bushing (42) and electrically connected at one end thereof to the associated bus (30) and at the other end thereof to said shielding member (42b), that said conductor cable (39) is of a length corresponding substantially to the distance between the adjoining connectors, and an exposed conductor portion (39a) at each end of the insulated cable (39) has fixedly fitted thereon an electrically conductive, cylindrical plug member (44) having an outer diameter substantially equal to the diameter of said through hole of the shielding member (42b), said plug member (44) being in slidable surface-to surface contact with the internal surface of said through hole with a resilient contacting piece (43) interposed therebetween, and that a stress cone (47) is inserted between the outer surface of the insulated cable (39) and a conical recess (40) formed coaxially with, and in the end portion of, the through passage of the bushing (42), and means (49,49a,49b) are secured to the end portion of the bushing (42) for forcing said stress cone (47) toward a gap formed between the cable and the bushing.

2. An enclosed type switchgear array as set forth in claim 1 wherein said plug member (44) is secured to the exposed conductor portion (39a) of said insulated cable (39) by means of a number of wedge member (45) arranged around the conductor portion (39a) and a clamping member (46) forcing the wedge members (45) between the conductor portion (39a) and the plug member (44).

3. An enclosed type switchgear array as set forth in claim 1 wherein a pair of annular grooves (42a) are formed in the internal surface of said through hole of said shielding member (42b), and said resilient contacting piece (43) is placed in each of said annular grooves (42a) for improving the contact between said shielding member (42b) and said plug member (44).

4. An enclosed type switchgear array as set forth in claim 1 wherein said stress cone (47) is formed integrally out of a semi-conductive material portion (47a) and an insulating material portion (47b).

5. An enclosed type switchgear array as set forth in claim 1 wherein said means for forcing said stress cone (47) comprises a protective sheath (49) secured to an end of said bushing (42), a plurality of screw-threaded rods (49b) provided internally of said protective sheath (49) forforcing said stress cone toward the gap between said cable (39) and said bushing (42), and coiled springs (49a) provided around said screw-threaded rods (49b) for urging the same toward the stress cone (47).

## Patentansprüche

1. Gekapselte Schaltanlage mit mehreren gasgefüllten Schaltzellen (31A,31B,31C), von denen jede elektrische Apparate (34,35A,35B) und Stromzuleitungenj (30) enthält, wobei die Stromzuleitungen aneinandergrenzender Schaltzellen durch an der Außenseite der Schaltzellen mit einem vorbestimmten Abstand voneinander fest montierte Steckverbinder(36A,36B,36C) und ein sich zwischen aneinandergrenzenden Steckverbindern erstreckendes starres isoliertes Leiterkabel (39) miteinander verbunden sind,
dadurch gekennzeichnet, daß
jeder der Steckverbinder (36A,36B,36C) eine T-förmige isolierte Durchführung (42) mit einem eine Außenwand einer der Schaltzellen (31A,31B,31C) durchsetzenden und an dieser befestigten zentralen Schenkel, mit einem Paar seitlicherArmteile, die sich von dem Schenkelteil völlig außerhalb der einen Schaltzelle erstrecken, wobei die Armteile eine sich seitlich erstreckende Durchgangspassage, ein elektrisches Abschirmelement (42b) in Form einer in der Durchgangspassage befestigten Hülse mit einem koaxial zur Durchgangspassage verlaufenden Durchgangsloch aufweisen, wobei die Durchgangspassage und das Durchgangsloch des Abschirmelements (42b) einen größeren Durchmesser als der Außendurchmesser des Leiterkabels haben, und einem den Schenkelteil der isolierenden Durchführung (42) durchsetzenden Leiter (42c), der mit der zugehörigen Stromzuleitung-(30) und mit dem anderen Ende mit dem Abschirmelement (42b) elektrisch verbunden ist, enthält, daß das Leiterkabel (39) eine im wesentlichen dem Abstand zwischen benachbarten Steckverbindern entsprende Länge hat, daß ein freigelegtes Leiterteil (39a) an jedem Ende des isolierten Kabels (39), ein fest angepaßtes, elektrisch leitendes, zylindrisches Stopfenelement (44) mit einem Außendurchmesser, der im wesentlichen dem Durchmesser des Durchgangsloches des Abschirmelements (42b) gleich ist, enthält, wobei das Stopfenelement (44) sich in gleitendem gegenseitigen Oberflächenkontakt mit der Innenfläche des Durchgangsloches befindet, wobei dazwischen ein nachgiebiges Kontaktstück (43) vorgesehen ist, daß zwischen die Außenfläche des isolierten Kabels (39) und eine im Endteil der Durchgangspassage der Durchführung (42) gebildete konische Ausnehmung (40) ein Spannkonus eingesetzt ist, und daß am Endteil der Durchführung (42) Vorrichtungen (49,49a,49b) befestigt sind, welche den Spannkonus (47) gegen einen zwischen dem Kabel und der Durchführung gebildeten Spalt drängen.

2. Gekapselte Schaltanlage nach Anspruch 1, bei welcher das Stopfenelement (44) an dem freigelegten Leiterteil (39a) des isolierten Kabels (39) mit Hilfe einer Anzahl von um den Leitertei (39a) herum angeordneter Keilelemente (45) und eines Klemmelements (46) befestigt ist, das die Keilelemente (45) zwischen den Leiterteil (39a) und das Stopfenelement (44) drängt.

3. Gekapselte Schaltanlage nach Anspruch 1, bei welcher in der Innenfläche des Durchgangsloches des Abschirmelements (42b) ein Paar Ringnuten (42a) gebildet sind und daß das nachgiebige Kontaktstück (43) in jeder der Ringnuten (42a) angeordnet ist, um den Kontakt zwischen dem Abschirmelement (42b) und dem Stopfenelement (44) zu verbessern.

4. Gekapselte Schaltanlage nach Anspruch 1, bei welcher der Spannkonus (47) vollständig aus einem Halbleitermaterialteil (47a) und einem Isoliermaterialteil (47b) gebildet ist.

5. Gekapselte Schaltanlage nach Anspruch 1, bei welcher die den Spannkonus (47) beaufschlagende Vorrichtung eine an einem Ende der Durchführung (42) befestigte Schutzhülse (49), mehrere innerhalb der Schutzhülse (49) vorgesehene Gewindestäbe (49b), welche den Spannkonus in Richtung auf den Spalt zwischen dem Kabel (39) und die Durchführung (42) drängen, enthält, und daß um die Gewindestäbe (49b) herum Schraubenfedern (49a) vorgesehen sind, welche diese in Richtung auf den Spannkonus (47) drängen.

## Revendications

1. Une installation de couplage du type blindé composée de plusieurs cellules (31A, 31 B, 31 C) du type à remplissage de gaz, chaque cellule comprenant un appareil électrique (34, 35A, 35B) et des bus de source d'énergie (30), les bus de cellules voisines étant reliés les uns aux autres par des connecteur (36A, 36B, 36C) montés de façon fixe sur l'extérieur des cellules d'une distance prédéterminée l'une de l'autre et un câble conducteur isolé non flexible (39) s'étendant entre des connecteurs voisins: caractérisé en ce que chacun desdits connecteurs (36A, 36B, 36C) comprend une douille isolante (42) en forme de T possédant une partie centrale de patte insérée à travers une paroi extérieure de l'une des cellules (31A, 31 B, 31 C) et fixée sur cette paroi, une paire de parties latérales de bras s'étendant d'un seul tenant depuis ladite partie de patte sur une position extérieure à ladite cellule, lesdites parties de patte comportant un passage traversant s'étendant latéralement, un organe (42b) de blindage électriquement conducteur sous forme d'un manchon fermement fixé dans ledit passage traversant et comportant un trou axial traversant cylindrique coaxial au passage traversant, ledit passage traversant et ledit trou traversant de l'organe (42b) de blindage étant d'un diamètre plus grand que le diamètre extérieur dudit câble conducteur (39), et un conducteur (42c) traversant la partie de patte de ladite douille isolante (42) et étant relié électriquement à une de ses extrémités au bus associé (30) et à son autre extrémité audit organe (42b) de blindage, en ce que ledit câble conducteur (39) est d'une longueur correspondant sensiblement à la distance entre les connecteurs voisins, et qu'une partie exposée (39a) à chaque extrémité du câble isolé (39) comporte, ajusté de façon fixe sur elle, un organe cylindrique (44), électriquement conducteur, formant prise possédant un diamètre extérieur sensiblement égal au diamètre dudit trou traversant de l'organe (42b) de blindage, ledit organe (44) formant prise étant en contact coulissant surface-à-surface avec la surface intérieure dudit trou traversant, une pièce élastique (43) de contact étant interposée entre elles, et en ce qu'un cône (47) de contrainte est inséré entre la surface extérieure du câble isolé (39) et un évidement conique (40) formé coaxialement au passage traversant de la douille (42) et dans la partie d'extrémité de celui-ci, et en ce que des moyens (49, 49a, 49b) sont fixés sur la partie d'extrémité de la douille (42) pour forcer ledit cône de contrainte (47) vers un intervalle formé entre le câble et la douille.

2. Une installation de couplage du type blindé selon la revendication 1 dans lequel ledit organe (44) formant prise est fixé sur la partie exposée (39a) de conducteur dudit câble isolant (39) au moyen d'un nombre d'organe (45) formant câles, disposés autour de la partie (39a) de conducteur et d'un organe (46) de serrage qui force les organes (45) formant câles entre la partie (39a) de conducteur et l'organe formant prise (44).

3. Une installation de couplage du type blindé selon la revendication 1 dans lequel une paire de rainures annulaires (42a) sont formées dans la surface intérieure dudit trou traversant dudit organe (42b) de blindage, et ladite pièce élastique (43) de contact est placée dans chacune desdites rainures annulaires (42a) pour améliorer le contact entre ledit organe (62b) de blindage et ledit organe (44) formant prise.

4. Une installation de couplage du type blindé selon la revendication 1 dans lequel ledit cône (47) de contrainte est formé d'un seul tenant à partir d'une partie (47a) de matériel semi-conducteur et d'une partie (47b) de matière isolante.

5. Une installation de couplage du type blindé selon la revendication 1 dans lequel lesdits moyens pourforcer ledit cône (47) de contrainte comprennent une gaine protectrice (49) fixée sur une extrémité de ladite douille (42), plusieurs tiges filetées (49b) disposées à l'intérieur de ladite gaine protectrice (49) pour forcer led it cône de contrainte vers l'intervalle entre ledit câble (39) et ladite douille (42), et des ressorts à boudin (49a) disposés autour desdites tiges filetées (49b) pour solliciter celles-ci vers le cône de contrainte (47).
